# FASCICULE DE BREVET EUROPEEN

(11) **EP 2 298 642 B1**
(45) Date de publication et mention de la délivrance du brevet: **07.12.2016**
(21) Numéro de dépôt: 10305970.5
(22) Date de dépôt: 09.09.2010
(51) Int. Cl.: B63H 21/20, B63H 23/10, B63J 3/02, H02K 7/00

(54) **Dispositif de génération de courant et/ou de motorisation électrique à bord d'une structure navigante**
Vorrichtung für die Erzeugung von Elektrizität und/oder für einen Elektroantrieb für Wasserfahrzeuge
device for generating electricity and/or for electric motorisation for a watercraft

(30) Priorité: 10.09.2009 FR 0956202
(43) Date de publication de la demande: 23.03.2011
(73) Titulaire: Nanni Industries, 33260 La Teste de Buch (FR)
(72) Inventeur: PICCOLO, Dino, 33470, LE TEICH (FR)
(74) Mandataire: Aquinov

(56) Documents cités:
- EP-A1- 1 426 288
- EP-A1- 1 669 287
- EP-A1- 1 806 284
- WO-A1-99/22955
- WO-A1-2007/075148
- US-A1- 2007 184 728
- US-A1- 2007 202 755

## Description

La présente invention est relative à un dispositif selon revendication 1.

Dans la navigation, et plus particulièrement dans la navigation de plaisance, les équipements électriques sont nombreux : électronique de bord, cuisine équipée avec four micro-ondes et réfrigérateur, télévision, eau sous pression, climatisation, et autres équipements de ponts, et pour la plupart des unités navigantes de plaisance, le confort est devenu un critère essentiel de choix. Dans une structure navigante susceptible d'être propulsée par au moins un moteur thermique, quelle que soit sa taille, ladite motorisation est équipée d'au moins un alternateur permettant la charge d'un parc batteries moteur utilisé pour les fonctions moteur et notamment le démarrage.

Ce parc batteries est rarement dimensionné pour les services et le confort.

De plus, le moteur étant un organe essentiel ou de sécurité d'une structure navigante, il est apparu nécessaire de séparer le parc batteries en un parc batteries moteur et un parc batteries services.

Le parc batteries services dispose généralement d'une forte capacité d'accumulation d'énergie électrique, mais les équipements électriques étant de plus en plus nombreux et sophistiqués, il convient de pouvoir recharger ces batteries.

Plusieurs dispositifs de l'art antérieur répondent à cette exigence.

Un dispositif connu de l'art antérieur est décrit dans la demande de brevet européen EP-1.806.284 du même déposant.

Ainsi, ce document EP-1.806.284 est relatif à un dispositif de génération de courant électrique et/ou de motorisation électrique dans une structure navigante, tout comme la présente invention.

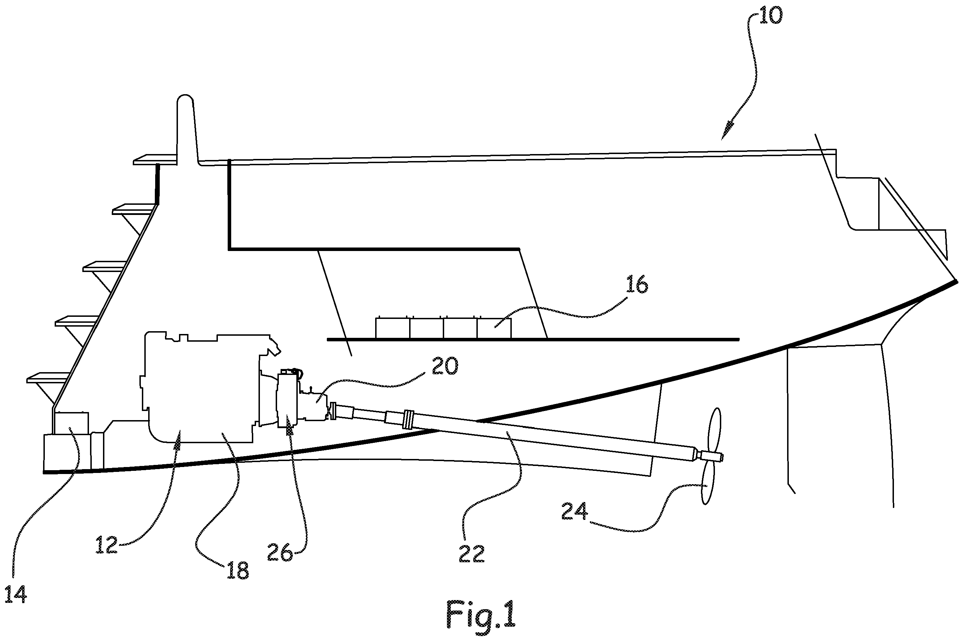

Comme illustré sur la figure 1, une structure navigante 10 comprend au moins une motorisation 12, un parc batteries moteur 14 et un parc batteries services 16. Ladite motorisation 12 comprend au moins un moteur thermique 18, un ensemble 20 réducteur/inverseur, une ligne d'arbre 22 équipée d'une hélice 24 à son extrémité.

Selon ce document EP-1.806.284, le dispositif de génération de courant 26 est intercalé entre le moteur 18 et l'ensemble 20 réducteur/inverseur, le moteur 18 et l'ensemble 20 étant eux-mêmes solidarisés aux supports prévus à cet effet dans la coque de la structure navigante.

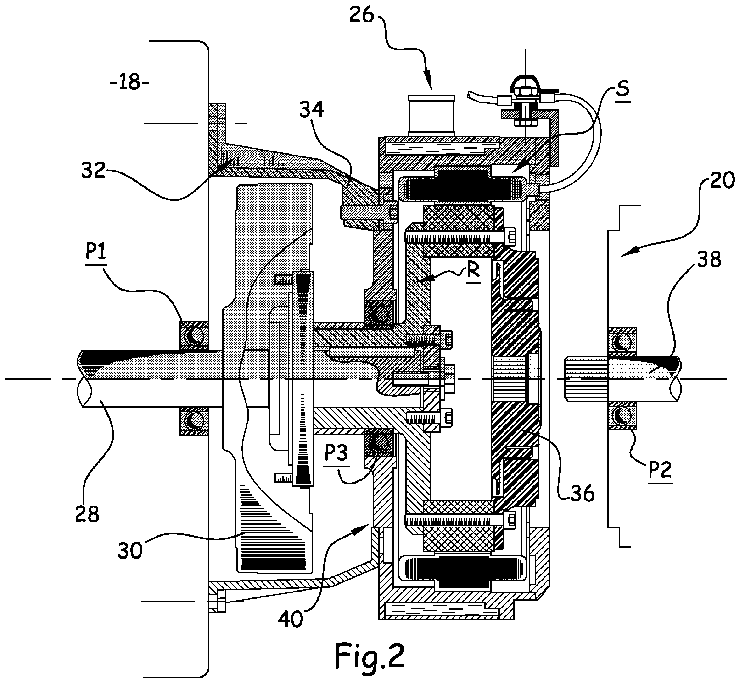

Comme représenté sur la figure 2, en amont du dispositif de génération de courant 26, les fabricants de moteur fournissent des blocs moteur avec un arbre 28 menant monté sur un palier P1 et portant un volant 30, ce volant étant placé dans une cloche 32 rapportée sur le bloc moteur et disposant d'une bride 34, le tout étant normalisé.

En sortie du dispositif de génération de courant 26, il est prévu une liaison élastique 36, dite flector et également normalisée, afin de recevoir l'arbre mené 38, monté sur un palier P2, de l'ensemble 20 réducteur/inverseur.

Ce dispositif de génération de courant 26 de l'art antérieur s'interpose donc directement entre l'arbre 28 menant du moteur 18 et l'arbre 38 mené de l'ensemble 20 réducteur/inverseur moyennant un décalage longitudinal ménagé entre les deux organes, généralement un déplacement du moteur 18 vers l'avant de la structure navigante de 150 à 200 mm pour donner un ordre de grandeur. Afin de générer un courant pour alimenter un parc batteries, ledit dispositif de génération 26 comprend un carter 40 lié à la bride 34 de la cloche 32 du bloc moteur , un stator S solidaire de ce carter 40 et un rotor R lié à l'arbre menant 28, monté sur un palier P3 ménagé dans ledit carter 40.

Selon un premier inconvénient, la conception de ce dispositif de génération de courant 26 n'offre pas une précision de montage suffisante. En effet, les paliers P1, P2 et P3 sont chacun monté séparément dans une partie distincte de ladite motorisation, soit respectivement dans le bloc moteur, dans l'ensemble 20 réducteur/inverseur et dans le carter 40.

Ces parties distinctes proviennent le plus souvent de différents fabricants, et par conséquent les tolérances de fabrication varient d'une partie à l'autre et les côtes les plus larges entraînent une perte de rigidité de tout l'ensemble.

Au final, la conception de ce dispositif de génération de courant 26 est préjudiciable à la rigidité du montage entre le stator S et le rotor R, et donc au maintien d'un entrefer constant entre ces deux éléments.

D'autre part, ce document EP-1.806.284 prévoit aussi une utilisation du dispositif de génération de courant 26 en tant que moteur électrique.

Pour ce mode de fonctionnement, des moyens d'accouplement/désaccouplement de l'entraînement moteur, dénommés embrayage, sont nécessaires pour solidariser ou désolidariser en entraînement l'arbre menant 28 et le rotor R.

Ce document EP-1.806.284 prévoit donc d'interposer cet embrayage entre l'arbre menant 28 et le rotor R du dispositif de génération 26, plus particulièrement au niveau du volant 30 dans la cloche 32.

Sachant que les fabricants fournissent des blocs moteur avec un volant 30 dans une cloche 32 tous deux normalisés, un réusinage du volant 30 est parfois nécessaire pour la mise en place dudit embrayage, ou bien, le développement d'un arbre spécifique, rapporté sur le volant 30, est indispensable pour pouvoir adapter ledit embrayage.

Telle qu'elle est prévue dans ce document EP-1.806.284, l'interposition de l'embrayage diminue la facilité d'adaptation du dispositif de génération de courant sur un bloc moteur, augmente le nombre d'heures de main d'oeuvre nécessaire, et empêche une vente au détail dudit dispositif de génération de courant.

Enfin, à l'utilisation sur des structures navigantes avec de plus en plus d'équipements électriques pour le confort, on constate que le dispositif de génération de courant 26 selon ce document EP-1.806.284 fournit une autonomie de plus en plus limitée.

Aussi, la présente invention vise à pallier les inconvénients de l'art antérieur en proposant un dispositif de génération de courant dont la conception offre une rigidité et une précision de montage accrue entre le rotor et le stator, de mise en place aisée et susceptible d'autoriser une plus grande autonomie d'un parc batteries.

Un autre exemple d'un agencement à l'extérieur de la coque est connu par US2007/0202755.

A cet effet, l'invention a pour objet un dispositif de génération de courant électrique et/ou de motorisation électrique dans une structure navigante comprenant au moins une motorisation et au moins un parc batteries, ladite motorisation comprenant au moins un moteur thermique, un ensemble réducteur/inverseur éventuellement intégré dans une transmission de type Saildrive, Sterndrive ou à turbine, et notamment une ligne d'arbre équipée d'au moins une hélice à son extrémité, le dispositif de génération de courant étant intercalé entre la bride de la cloche moteur dudit moteur et la bride de l'ensemble réducteur/inverseur, ledit dispositif étant caractérisé en ce qu'il prend la forme d'un module fermé directement insérable entre la bride de la cloche moteur et la bride de l'ensemble réducteur/inverseur sans démontage, total ou partiel, de ses composants.

D'autres caractéristiques et avantages ressortiront de la description qui va suivre de l'invention, description donnée à titre d'exemple uniquement, en regard des dessins annexés sur lesquels :
- la figure 1 est une vue d'un dispositif de génération de courant et/ou de motorisation électrique dans une structure navigante selon l'art antérieur,
- la figure 2 est une vue en coupe d'un dispositif de génération de courant et/ou de motorisation électrique selon l'art antérieur,
- la figure 3 est une vue en coupe d'un premier mode de réalisation d'un dispositif de génération de courant et/ou de motorisation électrique selon l'invention, en l'occurrence appliqué à une ligne d'arbre
- la figure 4 est une vue en coupe d'un deuxième mode de réalisation d'un dispositif de génération de courant et/ou de motorisation électrique selon l'invention,
- la figure 5 est une vue en coupe d'un troisième mode de réalisation d'un dispositif de génération de courant et/ou de motorisation électrique selon l'invention.
- la figure 6 est une vue reprenant les mêmes caractéristiques que les figures 3, 4 et 5, mais agencé pour un montage Stern Drive, ,
- la figure 7 est une est une variante de l'agencement pour un montage Stern Drive de la figure 1, encore simplifié, certains éléments inutiles ayant été retirés de la figure.

L'invention a pour objet un dispositif de génération de courant et/ou de motorisation électrique pour une structure navigante.

Comme décrit dans le préambule et illustré en figure 1, une structure navigante 10 comprend au moins une motorisation 12, un parc batteries moteur 14 et un parc batteries services 16.

Ladite motorisation 12 comprend au moins un moteur thermique 18, un ensemble 20 réducteur/inverseur, une ligne d'arbre 22 équipée d'au moins une hélice 24 à son extrémité, l'ensemble 20 réducteur/inverseur étant éventuellement intégré dans une transmission de type Saildrive, Sterndrive ou à turbine ainsi que décrit plus avant dans la description.

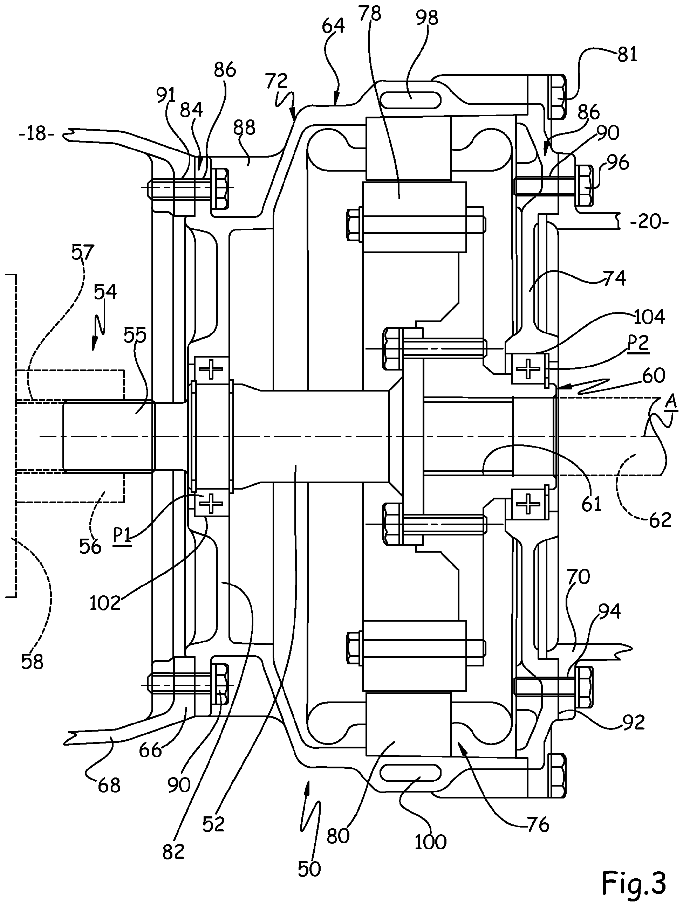

Tout comme le dispositif 26 de l'art antérieur décrit précédemment, et comme illustré en figure 3, le dispositif 50 de génération de courant selon l'invention est intercalé entre le moteur 18 et l'ensemble 20 réducteur/inverseur, le moteur 18 et l'ensemble 20 étant eux-mêmes solidarisés à la coque de la structure navigante 10 par des supports prévus à cet effet.

Le montage du dispositif 50 de génération de courant s'effectue en décalant le moteur 18 et ses supports, ou en raccourcissant la ligne d'arbre 22.

Le dispositif 50 comprend au moins un arbre d'entrée 52, côté moteur 18, équipé de moyens de couplage 54 avec le volant d'inertie 58 dudit moteur 18, ou un arbre de sortie 56, et, des moyens de liaison 60 avec l'arbre d'entrée 62 de l'ensemble 20 réducteur/inverseur.

De préférence, l'arbre d'entrée 52 et les moyens de liaison 60 ont un même axe central A autour duquel est conçu le dispositif 50 selon l'invention, ledit axe central A du dispositif 50 étant sensiblement coaxial à l'axe central du volant d'inertie 58, ou de l'arbre de sortie 56, du moteur 18 et à l'axe central de l'arbre d'entrée 62 de l'ensemble 20 réducteur/inverseur.

Afin d'être intercalé facilement entre le moteur 18 et l'ensemble 20 réducteur/inverseur, le dispositif 50 selon l'invention prend la forme d'un module 64 fermé directement adaptable et insérable entre la bride 66 de la cloche moteur 68 et la bride 70 de l'ensemble 20 réducteur/inverseur sans démontage, total ou partiel, de certains de ses composants.

A cet effet et de préférence, les moyens de couplage 54, notamment un accouplement souple de type flector, avec le volant d'inertie 58 dudit moteur 18, ou l'arbre de sortie 56, sont constitués d'un arbre cannelé 55, solidaire de l'arbre d'entrée 52, de formes et de dimensions adaptées à un moyeu cannelé 57, notamment normalisé, du volant d'inertie 58, ou de l'arbre de sortie 56, dudit moteur 18.

Et, les moyens de liaison 60 avec l'arbre d'entrée 62 de l'ensemble 20 réducteur/inverseur sont constitués d'un moyeu cannelé 61 de formes et de dimensions adaptées à l'arbre d'entrée 62, notamment normalisé.

Ensuite, ledit module 64 comprend au moins un carter 72 et un flasque arrière 74 renfermant au moins un ensemble générateur 76 composé d'un rotor 78 et d'un stator 80, ledit flasque arrière 74 étant rapporté et solidarisé sur le carter 72 par des vis de fixation 81, ou tout autre élément de solidarisation connu, lors de l'assemblage en usine dudit module 64.

Ledit stator 80 est solidaire du carter 72 et le rotor 78 est relié à l'arbre d'entrée 52 et au moyeu cannelé 61 des moyens de liaison 60 avec l'ensemble 20 réducteur/inverseur.

De façon connue, un entrefer fixe est maintenu entre le stator 80 et le rotor 78 par l'intermédiaire d'agencements décrits ultérieurement.

Pour une insertion aisée du module 64, l'embase 82 du carter 72 comprend des moyens de fixation 84 sur la bride 66 de la cloche moteur 68, notamment de dimensions normalisées, et le flasque arrière 74 comprend des moyens de réception 86 de l'ensemble 20 réducteur/inverseur.

Avantageusement, les moyens de fixation 84 sont accessibles depuis l'extérieur du module 64 et prennent la forme d'alésages 86 réalisés dans l'embase 82 du carter 72.

Lesdits alésages 86 sont répartis selon un design adapté à la bride 66 de la cloche moteur 68, ledit design étant notamment normalisé, et sont situés dans une gorge extérieure 88, venue de fabrication avec le carter 72, permettant l'accès auxdits alésages 86 pour le passage et le serrage de vis de fixation 90, ou de tout autre élément de solidarisation connu, dans des alésages 91, notamment filetés, prévus au niveau de la bride 66 de la cloche moteur 68.

De la même manière, les moyens de réception 86 du flasque arrière 74 sont adaptés au design de la bride 70 de fixation, notamment normalisée, de l'ensemble 20 réducteur/inverseur et ces moyens de réception 86 prennent la forme d'alésages 90, de préférence filetés, répartis selon le design, notamment normalisé, de la bride 70 de fixation de l'ensemble 20 réducteur/inverseur.

Plus précisément, lesdits alésages 90 du flasque arrière 74 sont répartis sur une couronne 92 sur laquelle vient en appui la bride 70 de l'ensemble 20 réducteur/inverseur, ladite bride 70 comprenant aussi des alésages 94 pour le passage et le serrage depuis l'extérieur de vis de fixation 96, ou de tout autre élément de solidarisation connu.

On constate donc que le module 64 selon l'invention est inséré, ou démonté, très rapidement et simplement entre le moteur 18 et l'ensemble 20 réducteur/inverseur.

Afin d'utiliser au maximum les capacités de production d'énergie électrique de l'ensemble générateur 76, un circuit de refroidissement 98 entourant le stator 80 est intégré dans le carter 72.

De préférence, ledit circuit de refroidissement 98 est constitué d'au moins un canal 100 venu de fabrication avec le carter 72, notamment par moulage, et relié, soit directement au circuit d'eau brute du moteur, soit à tout type d'échangeur de chaleur connu et utilisé dans une structure navigante.

Afin d'assurer une rigidité optimale de l'assemblage et le maintien d'un entrefer fixe entre le stator 80 et le rotor 78, ledit arbre d'entrée 52 est supporté et guidé en rotation par un palier P1, ledit palier P1 étant monté dans un logement 102 prévu à cet effet au centre de l'embase 82 du carter 72, et, le moyeu cannelé 61 des moyens de liaison 60 est supporté et guidé en rotation par un palier P2, ledit palier P2 étant monté dans un logement 104 prévu à cet effet au centre du flasque arrière 74.

Lesdits paliers P1 et P2 sont maintenus en translation selon l'axe A sur l'arbre d'entrée 52 et sur le moyeu cannelé 61 par un épaulement et/ou des anneaux élastiques, et les logements 102 et 104 bloquent respectivement la translation des paliers P1 et P2 selon l'axe A dans au moins un sens, de préférence vers l'extérieur.

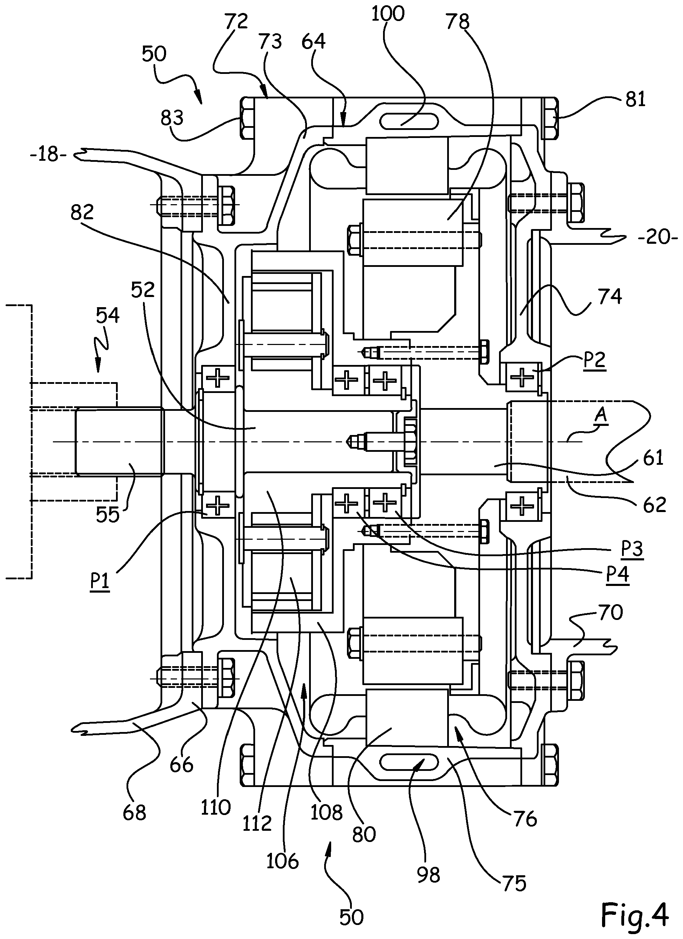

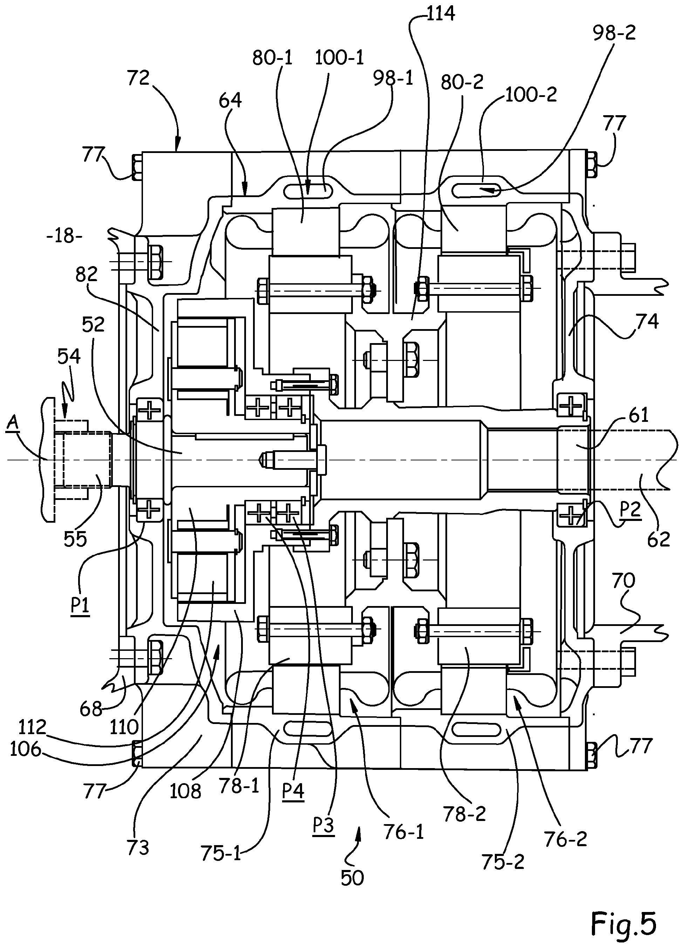

Selon une variante de réalisation du module 64, illustrée sur les figures 4 et 5, le carter 72 est formé par un flasque avant 73 solidaire d'une entretoise 75.

Ledit flasque avant 73 forme l'embase 82 du carter 72 comprenant les moyens de fixation 84 sur la bride 66 de la cloche moteur 68, l'entretoise 75 intègre le circuit de refroidissement 98 constitué d'au moins un canal 100, et des vis de fixation 83 sont utilisées pour la solidarisation dudit flasque avant 73 avec l'entretoise 75.

Cette variante permet avantageusement de standardiser l'entretoise 75 du carter 72 pour les différents modes de réalisation du module 64 décrits ci-après, mais aussi de remplacer facilement le flasque avant 73 pour l'adapter à une norme différente.

Différents modes de réalisation du module 64 du dispositif 50 de génération de courant selon l'invention vont maintenant être décrits de manière non limitative. Selon un premier mode de réalisation illustré en figure 3, autorisant un simple fonctionnement en mode génératrice du dispositif 50 selon l'invention, le rotor 78 est relié fixement, notamment par des vis, à l'arbre d'entrée 52 et au moyeu cannelé 61 des moyens de liaison 60.

Pour donner un ordre d'idées, dans ce premier mode de réalisation, l'insertion du module 64 nécessite un décalage du moteur 18, ou un raccourcissement de la ligne d'arbre 22, sensiblement inférieur à deux cents millimètres.

Selon un deuxième mode de réalisation illustré en figure 4, autorisant un fonctionnement en mode génératrice ou en mode motorisation électrique du dispositif 50 selon l'invention, le rotor 78 est relié fixement, notamment par des vis, au moyeu cannelé 61 des moyens de liaison 60, et accouplé à l'arbre d'entrée 52 par l'intermédiaire d'un embrayage 106 intégré dans le module 64 selon l'invention.

Plus précisément, cet embrayage 106 est du type centrifuge et comprend au moins une cloche d'embrayage 108 reliée fixement au rotor 78 et au moyeu cannelé 61, un moyeu 110 portant des masselottes 112 relié fixement à l'arbre d'entrée 52, et des paliers P3 et P4 assurant le support et le guidage en rotation de ladite cloche 108 par rapport au moyeu 110 porte-masselottes. Ainsi, ledit embrayage 106 permet d'accoupler/désaccoupler le rotor 78 de l'arbre d'entrée 52 entraîné par le moteur thermique 18 afin de permettre plusieurs utilisations de l'ensemble générateur 76.

Selon une première utilisation de l'ensemble générateur 76, lorsque ledit embrayage 106 accouple le rotor 78 et l'arbre d'entrée 52, l'ensemble générateur 76 est utilisé en tant que génératrice de courant entraînée par le moteur thermique.

Selon une deuxième utilisation de l'ensemble générateur 76, lorsque ledit embrayage désaccouple le rotor 78 et l'arbre d'entrée 52, l'ensemble générateur 76 peut être utilisé en tant que moteur électrique.

Et enfin, selon une troisième utilisation de l'ensemble générateur 76, lorsque ledit embrayage désaccouple le rotor 78 et l'arbre d'entrée 52, et que la structure navigante dispose d'un autre moyen de propulsion, notamment dans le cas d'un voilier naviguant sous voiles, l'hélice peut permettre un entraînement du réducteur/inverseur 20, l'arbre d'entrée 62 de l'ensemble 20 réducteur/inverseur devenant moteur et entraînant le moyeu 61 et donc le rotor 78 pour produire de l'énergie électrique.

Pour donner un ordre d'idées, dans ce deuxième mode de réalisation, l'insertion du module 64 nécessite un décalage du moteur 18, ou un raccourcissement de la ligne d'arbre 22, toujours sensiblement inférieur à deux cents millimètres. Selon un troisième mode de réalisation illustré en figure 5, autorisant un fonctionnement en mode génératrice ou en mode motorisation électrique du dispositif 50 selon l'invention, le module 64 renferme deux ensembles générateur 76-1, 76-2, chacun composé d'un rotor 78-1, 78-2 et d'un stator 80-1, 80-2.

Ledit module 64 comprend le carter 72 composé du flasque avant 73, de deux entretoises (75-1,75-2) et du flasque arrière 74, la deuxième entretoise 75-2 prolongeant ledit carter.

Lesdites entretoises (75-1,75-2) ainsi que lesdits flasques avant 73 et arrière 74 sont solidarisés par des vis de fixation 77, ou tout autre élément de solidarisation connu, lors de l'assemblage en usine dudit module 64.

Le stator 80-1 est solidaire de l'entretoise 75-1, le stator 80-2 est solidaire de l'entretoise 75-2, et les rotors 78-1 et 78-2 sont reliés fixement au moyeu cannelé 61 des moyens de liaison 60 par une pièce intermédiaire 114 et des vis de fixation, ou tout autre élément de solidarisation connu.

Avantageusement, les entretoises (75-1,75-2) intègrent chacune un circuit de refroidissement (98-1,98-2) constitué d'au moins un canal (100-1,100-2), notamment reliés et entourant les stators (80-1,80-2).

Les rotors 78-1 et 78-2 sont accouplés à l'arbre d'entrée 52 par l'intermédiaire de l'embrayage 106 intégré dans le module 64 selon l'invention.

La cloche d'embrayage 108 est reliée fixement aux rotors 78-1 et 78-2 et au moyeu cannelé 61, le moyeu 110 portant les masselottes 112 est relié fixement à l'arbre d'entrée 52, et les paliers P3 et P4 assurent le support et le guidage en rotation de ladite cloche 108 par rapport au moyeu 110 porte-masselottes. Ainsi, ledit embrayage 106 permet de d'accoupler/désaccoupler les rotors 78-1 et 78-2 de l'arbre d'entrée 52 entraîné par le moteur thermique 18 afin de permettre plusieurs utilisations des deux ensembles générateur 76-1, 76-2. Selon une première utilisation des deux ensembles générateur 76-1, 76-2, lorsque ledit embrayage 106 accouple les rotors 78-1 et 78-2 et l'arbre d'entrée 52, les deux ensembles générateur 76-1, 76-2 sont utilisés en tant que génératrice de courant entraînée par le moteur thermique.

Selon une deuxième utilisation des deux ensembles générateur 76-1, 76-2, lorsque ledit embrayage désaccouple les rotors 78-1 et 78-2 et l'arbre d'entrée 52, les deux ensembles générateur 76-1, 76-2 peuvent être utilisés en tant que moteur électrique.

Et enfin, selon une troisième utilisation des deux ensembles générateur 76-1, 76-2, lorsque ledit embrayage désaccouple les rotors 78-1 et 78-2 et l'arbre d'entrée 52, et que la structure navigante dispose d'un autre moyen de propulsion, notamment dans le cas d'un voilier naviguant sous voiles, l'hélice peut permettre un entraînement du réducteur/inverseur 20, l'arbre d'entrée 62 de l'ensemble 20 réducteur/inverseur devenant moteur et entraînant le moyeu 61 et donc les rotors 78-1 et 78-2 pour produire de l'énergie électrique. Avantageusement, lorsqu'ils sont utilisés en génératrice de courant, les deux-ensembles générateur 76-1, 76-2 peuvent alimenter un même parc batteries, ou alors alimenter deux parcs batteries différents en fournissant chacun une tension identique ou différente.

De plus, ce troisième mode de réalisation du module 64 reprend les mêmes composants que les deux premiers modes de réalisation, à l'exception du moyeu 61 et de quelques vis. Cette uniformisation est particulièrement avantageuse en terme de coût d'élaboration et de fabrication d'une gamme de produits.

Pour donner un ordre d'idées, dans ce troisième mode de réalisation, l'insertion du module 64 nécessite un décalage du moteur 18, ou un raccourcissement de la ligne d'arbre 22, sensiblement inférieur à trois cents millimètres.

On constate donc que, quel que soit le mode de réalisation, le module 64 du dispositif 50 selon l'invention est compact, tout en intégrant un embrayage ou une double génératrice de courant, et se présente sous la forme d'un bloc prêt à être monté ou vendu séparément.

Bien entendu, le dispositif 50 selon l'invention est adaptable à tout type de propulsion autre qu'une ligne d'arbre 22 directe avec une hélice 24 à son extrémité.

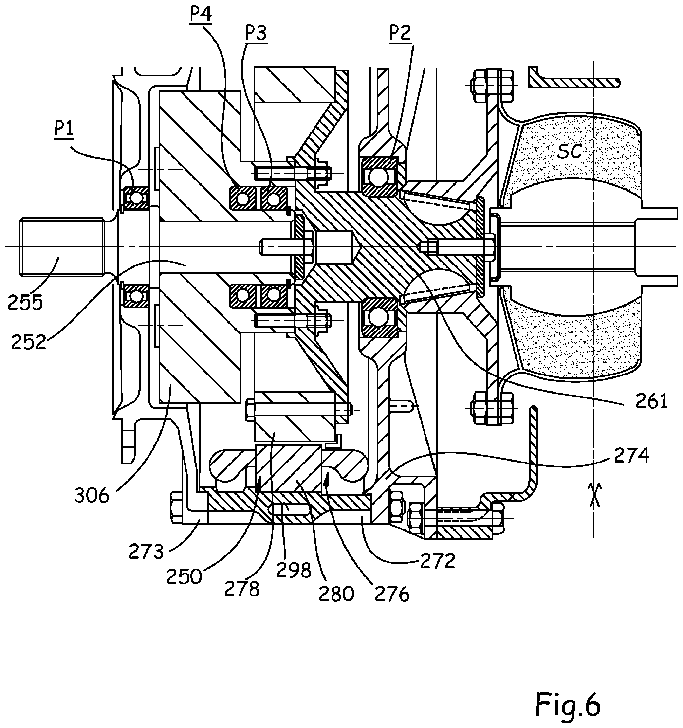

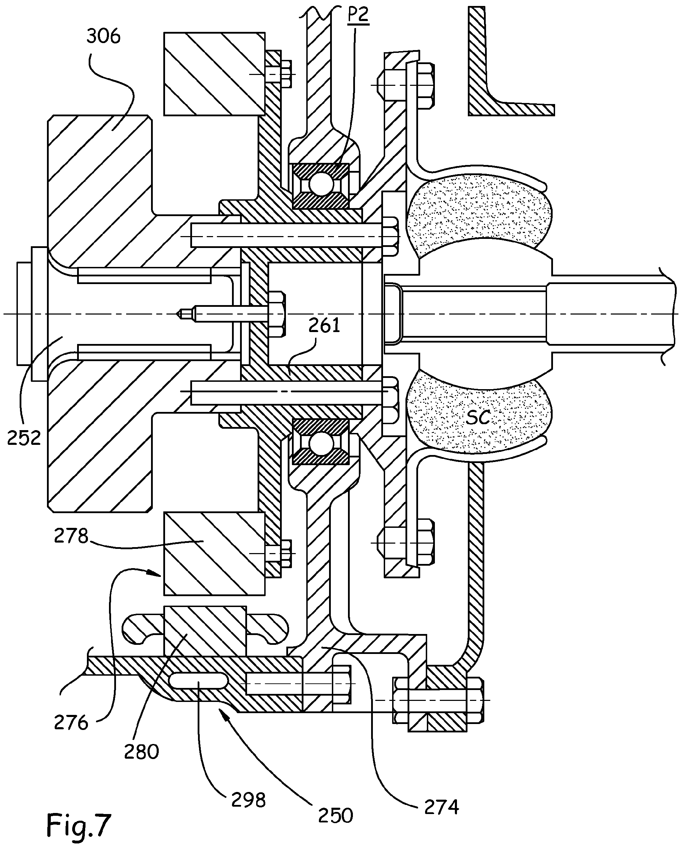

C'est ainsi que sur les figures 6 et 7 représentent respectivement un montage pour une application à un montage Stern Drive et une variante de ce montage. Sur ces figures les références sont identiques à celle du mode de réalisation précédent visant plus particulièrement un montage à ligne d'arbre mais augmentées de 200. Les éléments communs de ces deux figure s6 et 7 sont identiques.

En effet, les éléments de l'invention sont strictement identiques, seuls les agencements sont modifiés pour une intégration à chaque type de montage et en l'occurrence à celui du Stern Drive.

Sur la figure 6, on retrouve le dispositif 250selon l'invention, un embrayage 306 monté sur l'arbre d'entrée 252 avec sa partie cannelée 255.

L'arbre de sortie 261 attaque le système de couplage *SC* connu sous le nom de "Boule de Gomme".

Le dispositif 250 selon l'invention comprend un ensemble générateur 276 avec un rotor 278 et un stator 280.

Le stator 280 est solidaire du carter 272 tandis que le rotor 278 est solidaire de l'arbre 261 de sortie. On retrouve les flasques avant 273 et arrière 274.

Les paliers P1, P2, P3 et P4 sont conservés aux mêmes lieux et pour les mêmes fonctions.

De même, le circuit de refroidissement 298 est prévu.

Sur la figure 7, les références des pièces sont reprises à l'identique, seule l'architecture étant modifiée.

On constate que le dispositif selon l'invention est directement transposable sur tout type de montage, avec les seules connaissances de l'homme de l'art.

## Revendications

1. Dispositif (50) de génération de courant électrique et/ou de motorisation électrique pour équiper une structure navigante comprenant elle- même au moins un parc batteries (14,16), au moins une motorisation (12) comprenant au moins un moteur thermique (18) avec une cloche moteur (68) munie d'une bride (66), un ensemble (20) réducteur/ inverseur muni d'une bride (70), et notamment une ligne d'arbre (22) équipée d'au moins une hélice (24) à son extrémité coopérant avec ledit ensemble (20) réducteur/inverseur, le dispositif (50) de génération de
courant étant intercalable entre les brides (66) et (70),
**caractérisé en ce que** ledit dispositif (50) de génération de courant et/ou de motorisation électrique est un module (64) comprenant au moins :
- un carter (72) solidarisable à ladite bride (66) de la cloche moteur (68), renfermant au moins un ensemble générateur (76) composé d'un rotor (78) et d'un stator (80),
- un flasque arrière (74) rapporté et solidarisé sur le carter (72) d'une part et rapportable et solidarisable sur la bride (70) de l'ensemble réducteur/inverseur d'autre part.

2. Dispositif (50) de génération de courant électrique et/ou de motorisation électrique dans une structure navigante selon la revendication 1, **caractérisé en ce que** ledit stator (80) est solidaire du carter (72) et **en ce que** ledit rotor (78) est solidaire d'un arbre d'entrée (52), côté moteur (18) thermique, équipé de moyens de couplage (54) avec ledit moteur et des moyens (60) de liaison avec l'ensemble (20) réducteur/inverseur.

3. Dispositif (50) de génération de courant électrique et/ou de motorisation électrique dans une structure navigante selon la revendication 2, **caractérisé en ce que** le rotor (78) est relié fixement à l'arbre d'entrée (52) et aux moyens de liaison (60).

4. Dispositif (50) de génération de courant électrique et/ou de motorisation électrique dans une structure navigante selon la revendication 2, **caractérisé en ce que** le rotor (78) est relié fixement aux moyens de liaison (60), et accouplé à l'arbre d'entrée (52) par l'intermédiaire d'un embrayage (106) intégré dans le module (64).

5. Dispositif (50) de génération de courant électrique et/ou de motorisation électrique dans une structure navigante selon la revendication 2, **caractérisé en ce que** le module (64) renferme deux ensembles générateur (76-1, 76-2), chacun composé d'un rotor (78-1, 78-2) et d'un stator (80-1, 80-2), ledit module (64) comprenant le carter (72) composé d'un flasque avant (73), de deux entretoises (75-1,75-2) et du flasque arrière (74), et **en ce que** le stator (80-1) est solidaire de l'entretoise (75-1), le stator (80-2) est solidaire de l'entretoise (75-2), les rotors (78-1, 78-2) sont reliés fixement aux moyens de liaison (60) par une pièce intermédiaire (114), et les rotors (78-1, 78-2) sont accouplés à l'arbre d'entrée (52) par l'intermédiaire d'un embrayage (106) intégré dans le module (64).

6. Dispositif (50) de génération de courant électrique et/ou de motorisation électrique dans une structure navigante selon la revendication 5, **caractérisé en ce que** les deux ensembles générateur (76-1, 76-2) fournissent des tensions identiques ou différentes.

7. Dispositif (50) de génération de courant électrique et/ou de motorisation électrique dans une structure navigante selon l'une des revendications 4, 5 ou 6, **caractérisé en ce que** l'embrayage (106) comprend au moins une cloche d'embrayage (108), reliée fixement au(x) rotor(s) (78, 78-1, 78-2) et aux moyens de liaison (60), et un moyeu (110) portant des masselottes (112) relié fixement à l'arbre d'entrée (52), des paliers P3 et P4 assurant le support et le guidage en rotation de ladite cloche (108) par rapport au moyeu (110) porte-masselottes.

8. Dispositif (50) de génération de courant électrique et/ou de motorisation électrique dans une structure navigante selon l'une des revendications 2 à 7, **caractérisé en ce que** ledit arbre d'entrée (52) est supporté et guidé en rotation par un palier P1 monté dans un logement (102) prévu au centre de l'embase (82) du carter (72), et **en ce que** des moyens de liaison (60) comprennent un moyeu cannelé (61) supporté et guidé en rotation par un palier P2 monté dans un logement (104) prévu au centre du flasque arrière (74).

9. Dispositif (50) de génération de courant électrique et/ou de motorisation électrique dans une structure navigante selon l'une des revendications 2 à 8, **caractérisé en ce qu'**il comprend un circuit de refroidissement (98, 98-1, 98-2) sous forme d'un canal (100, 100-1, 100-2) entourant le stator (80, 80-1, 80-2), intégré dans le carter/l'entretoise (72, 75, 75-1, 75-2).

10. Dispositif (50) de génération de courant électrique et/ou de motorisation électrique dans une structure navigante selon l'une des revendications 2 à 9, **caractérisé en ce que** l'embase (82) du carter (72) comprend des moyens de fixation (84) sur la bride (66) de la cloche moteur (68), les moyens de fixation (84) étant accessibles depuis l'extérieur du module (64) et prenant la forme d'alésages (86) réalisés dans l'embase (82) du carter (72), et **en ce que** le flasque arrière (74) comprend des moyens de réception (86) de l'ensemble (20) réducteur/inverseur, lesdits moyens de réception (86) prenant la forme d'alésages (90) répartis sur une couronne (92) sur laquelle vient en appui la bride (70) comprenant des alésages (94) pour le passage et le serrage depuis l'extérieur de vis de fixation (96).

11. Module (64) de génération de courant électrique et/ou de motorisation électrique réalisé selon l'une des revendications précédentes.

## Patentansprüche

1. Vorrichtung (50) für die Erzeugung von elektrischem Strom und/oder für einen elektrischen Antrieb zur Ausstattung eines Wasserfahrzeugs, das selbst ausgestattet ist mit einer Batteriebank (14, 16), mit wenigstens einer Motorisierung (12), die wenigstens einen Verbrennungsmotor (18) mit einer Motorhaube (68) umfasst, die über einen Flansch (66) verfügt, mit einer Getriebe-/Umkehreinheit (20), die über einen Flansch (70) verfügt, und insbesondere mit einer Wellenanordnung (22), die an ihrem Ende mit wenigstens einer Schraube (24) ausgestattet ist und die mit der Getriebe-/Umkehreinheit (20) zusammenwirkt, wobei die Vorrichtung (50) für die Erzeugung von Strom zwischen die Flansche (66) und (70) einfügbar ist, **dadurch gekennzeichnet, dass** die Vorrichtung (50) für die Erzeugung von Strom und/oder für einen elektrischen Antrieb ein Modul (64) ist, mit wenigstens:
- einem Gehäuse (72), das an dem Flansch (66) der Motorhaube (68) befestigbar ist und wenigstens eine Generatoreinheit (76) einschließt, die aus einem Rotor (78) und einem Stator (80) zusammengesetzt ist,
- einem hinteren Lagerschild (74), der einerseits an dem Gehäuse (72) angebracht und befestigt ist und andererseits am Flansch (70) der Getriebe-/Umkehreinheit anbringbar und befestigbar ist.

2. Vorrichtung (50) für die Erzeugung von elektrischem Strom und/oder für einen elektrischen Antrieb in einem Wasserfahrzeug nach Anspruch 1, **dadurch gekennzeichnet, dass** der Stator (80) am Gehäuse (72) angebracht ist und dass der Rotor (78) seitens des Verbrennungsmotors (18) mit einer Eingangswelle (52) fest verbunden ist, die mit Mitteln (54) für die Kopplung mit dem Motor ausgestattet ist, und mit Mitteln (60) für die Verbindung mit der Getriebe-/Umkehreinheit (20) fest verbunden ist.

3. Vorrichtung (50) für die Erzeugung von elektrischem Strom und/oder einen elektrischen Antrieb in einem Wasserfahrzeug nach Anspruch 2, **dadurch gekennzeichnet, dass** der Rotor (78) fest mit der Eingangswelle (52) und den Mitteln (60) für die Verbindung verbunden ist.

4. Vorrichtung (50) für die Erzeugung von elektrischem Strom und/oder einen elektrischen Antrieb in einem Wasserfahrzeug nach Anspruch 2, **dadurch gekennzeichnet, dass** der Rotor (78) fest mit den Mitteln (60) für die Verbindung verbunden ist und mit Hilfe einer in das Modul (64) integrierten Kupplung (106) an die Eingangswelle (52) gekoppelt ist.

5. Vorrichtung (50) für die Erzeugung von elektrischem Strom und/oder einen elektrischen Antrieb in einem Wasserfahrzeug nach Anspruch 2, **dadurch gekennzeichnet, dass** das Modul (64) zwei Generatoreinheiten (76-1, 76-2) einschließt, von denen jede aus einem Rotor (78-1, 78-2) und einem Stator (80-1, 80-2) zusammengesetzt ist, wobei das Modul (64) ein Gehäuse (72) aufweist, das aus einem vorderen Lagerschild (73), zwei Abstandshaltern (75-1, 75-2) und einem hinteren Lagerschild (74) zusammengesetzt ist, und dass der Stator (80-1) mit dem Abstandshalter (75-1) fest verbunden ist, der Stator (80-2) mit dem Abstandshalter (75-2) fest verbunden ist und die Rotoren (78-1, 78-2) mit Hilfe eines Zwischenstücks (114) eine feste Verbindung mit den Mitteln (60) für die Verbindung aufweisen und dass die Rotoren (78-1, 78-2) mit der Eingangswelle (52) mit Hilfe einer in das Modul (64) integrierten Kupplung (106) an die Eingangswelle (52) gekoppelt sind.

6. Vorrichtung (50) für die Erzeugung von elektrischem Strom und/oder einen elektrischen Antrieb in einem Wasserfahrzeug nach Anspruch 5, **dadurch gekennzeichnet, dass** die beiden Generatoreinheiten (76-1, 76-2) gleiche oder verschiedene Spannungen liefern.

7. Vorrichtung (50) für die Erzeugung von elektrischem Strom und/oder einen elektrischen Antrieb in einem Wasserfahrzeug nach einem der Ansprüche 4, 5 oder 6, **dadurch gekennzeichnet, dass** die Kupplung (106) ausgestattet ist mit einem Kupplungskorb (108), der fest mit dem(den) Rotor(en) (78, 78-1, 78-2) und mit Mitteln (60) für die Verbindung verbunden ist, mit einer Nabe (110), die Kupplungsbacken (112) hält und die fest mit der Eingangswelle (52) verbunden ist, und mit Lagern P3 und P4, die den Halt und die Führung bei der Drehung des Korbes (108) bezüglich der die Kupplungsbacken tragenden Nabe (110) gewährleisten.

8. Vorrichtung (50) für die Erzeugung von elektrischem Strom und/oder einen elektrischen Antrieb in einem Wasserfahrzeug nach einem der Ansprüche 2 bis 7, **dadurch gekennzeichnet, dass** die Eingangswelle (52) bei der Drehung durch ein Lager P1 gehalten und geführt ist, das in einer Aufnahme (102) montiert ist, die im Zentrum des Sockels (82) des Gehäuses (72) vorgesehen ist, und dass die Mittel (60) für die Verbindung eine geriffelte Nabe (61) aufweisen, die bei der Drehung durch ein Lager P2 gehalten und geführt ist, das in einer Aufnahme (104) montiert ist, die im Zentrum des hinteren Lagerschilds (74) vorgesehen ist.

9. Vorrichtung (50) für die Erzeugung von elektrischem Strom und/oder einen elektrischen Antrieb in einem Wasserfahrzeug nach einem der Ansprüche 2 bis 8, **dadurch gekennzeichnet, dass** diese einen Kühlkreislauf (98, 98-1, 98-2) in der Gestalt eines Kanals (100, 100-1, 100-2) aufweist, der um den Stator (80, 80-1, 80-2) umläuft und der in das Gehäuse/den Abstandshalter (72, 75, 75-1, 75-2) integriert ist.

10. Vorrichtung (50) für die Erzeugung von elektrischem Strom und/oder einen elektrischen Antrieb in einem Wasserfahrzeug nach einem der Ansprüche 2 bis 9, **dadurch gekennzeichnet, dass** der Sockel (82) des Gehäuses (72) Mittel (84) für die Befestigung auf dem Flansch (66) der Motorhaube (68) aufweist, wobei die Mittel (84) für die Befestigung vom Äußeren des Moduls (64) her zugänglich sind und die Form von Durchführungen (86) aufweisen, die im Sockel (82) des Gehäuses (72) ausgebildet sind, und dass das hintere Lagerschild (74) Mittel (86) für die Aufnahme der Getriebe-/Umkehreinheit (20) aufweist, wobei die Mittel (86) für die Aufnahme als Durchführungen (90) ausgebildet sind, die über einen Kranz (92) verteilt sind, auf dem sich der Flansch (70) abstützt, der Durchführungen (94) für das Hindurchführen und das Befestigen von Befestigungsschrauben (96) von außen aufweist.

11. Modul (64) für die Erzeugung von elektrischem Strom und/oder einen elektrischen Antrieb, das nach einem der vorhergehenden Ansprüche ausgeführt ist.

## Claims

1. A device (50) for generating an electric current and/or for electric motorisation for equipping a sailing craft itself comprising at least one set of batteries (14, 16), at least one drive (12) comprising at least one thermal engine (18) with an engine cover (68) provided with a flange (66), a gearbox/reverse gear assembly (20) provided with a flange (70), and in particular a shaft (22) equipped with at least one propeller (24) at an end thereof cooperating with said gearbox/reverse gear assembly (20), the current-generating device (50) being able to be interposed between the flanges (66) and (70), **characterised in that** said current generating and/or electric motorisation device (50) is a module (64) comprising at least:
- a casing (72) able to be secured to said flange (66) of the engine cover (68), enclosing at least one generator assembly (76) composed of a rotor (78) and a stator (80),
- a rear plate (74) attached and secured to the casing (72) on the one hand and attachable and securable to the flange (70) of the gearbox/reverse gear assembly on the other hand.

2. An electric current generating and/or electric motorisation device (50) for a sailing craft according to claim 1, **characterised in that** said stator (80) is secured to the casing (72) and **in that** said rotor (78) is secured to an input shaft (52), on the thermal engine (18) side, equipped with means (54) for coupling with said engine and means (60) for connection with the gearbox/reversing gear assembly (20).

3. An electric current generating and/or electric motorisation device (50) for a sailing craft according to claim 2, **characterised in that** the rotor (78) is fixedly connected to the input shaft (52) and to the connection means (60).

4. An electric current generating and/or electric motorisation device (50) for a sailing craft according to claim 2, **characterised in that** the rotor (78) is fixedly connected to the connection means (60) and coupled to the input shaft (52) by means of a clutch (106) integrated in the module (64).

5. An electric current generating and/or electric motorisation device (50) for a sailing craft according to claim 2, **characterised in that** the module (64) encloses two generator assemblies (76-1, 76-2), each composed of a rotor (78-1, 78-2) and a stator (80-1, 80-2), said module (64) comprising the casing (72) composed of a front plate (73), two struts (75-1, 75-2) and the rear plate (74), and **in that** the stator (80-1) is secured to the strut (75-1), the stator (80-2) is secured to the strut (75-2), the rotors (78-1, 78-2) are fixedly connected to the connection means (60) by an intermediate part (114), and the rotors (78-1, 78-2) are coupled to the input shaft (52) by means of a clutch (106) integrated in the module (64).

6. An electric current generating and/or electric motorisation device (50) for a sailing craft according to claim 5, **characterised in that** the two generator assemblies (76-1, 76-2) supply identical or different voltages.

7. An electric current generating and/or electric motorisation device (50) for a sailing craft according to one of claims 4, 5 or 6, **characterised in that** the clutch (106) comprises at least one clutch cover (108), fixedly connected to the rotor or rotors (78, 78-1, 78-2) and to the connection means (60), and a hub (110) carrying weights (112) fixedly connected to the input shaft (52), bearings P3 and P4 providing the support and rotational guidance for said cover (108) with respect to the weight-carrier hub (110).

8. An electric current generating and/or electric motorisation device (50) for a sailing craft according to one of claims 2 to 7, **characterised in that** said input shaft (52) is supported and rotationally guided by a bearing P1 mounted in a housing (102) provide at the centre of the base (82) of the casing (72), and **in that** connection means (60) comprise a fluted hub (61) supported and rotationally guided by a bearing P2 mounted in a housing (104) provided at the centre of the rear plate (74).

9. An electric current generating and/or electric motorisation device (50) for a sailing craft according to one of claims 2 to 8, **characterised in that** it comprises a cooling circuit (98, 98-1, 98-2) in the form of a channel (100, 100-1, 100-2) surrounding the stator (80, 80-1, 80-2) integrated in the casing/strut (72, 75, 75-1, 75-2).

10. An electric current generating and/or electric motorisation device (50) for a sailing craft according to one of claims 2 to 9, **characterised in that** the base (82) of the casing (72) comprises means (84) for fixing to the flange (66) of the engine cover (68), the fixing means (84) being accessible for the outside of the module (64) and taking the form of bores (86) produced in the base (82) of the casing (72), and **in that** the rear plate (74) comprises means (86) for receiving the gearbox/reversing gear assembly (20), said reception means (86) taking the form of bores (90) distributed over a ring (92) on which there comes to bear the flange (70) comprising bores (94) for the passage and tightening of fixing screws (96) from the outside.

11. An electric current generating and/or electric motorisation module (64) implemented according to one of the preceding claims.
